Europäisches Patentamt

European Patent Office

Office européen des brevets

(19)

(11) **EP 0 730 361 A2**

(12) **EUROPÄISCHE PATENTANMELDUNG**

(43) Veröffentlichungstag:
04.09.1996 Patentblatt 1996/36

(51) Int. Cl.[6]: **H04L 12/56**, H04Q 11/04

(21) Anmeldenummer: 96102984.0

(22) Anmeldetag: 28.02.1996

(84) Benannte Vertragsstaaten:
**AT BE CH DE ES FR GB IT LI SE**

(30) Priorität: **03.03.1995 DE 19507569**

(71) Anmelder: **SIEMENS AKTIENGESELLSCHAFT**
**80333 München (DE)**

(72) Erfinder: **Riedel, Michael, Dipl.-Ing.**
**01157 Dresden (DE)**

(54) **Schaltungsanordnung zur Aufnahme und Weiterleitung von Nachrichtenzellen durch eine ATM-Kommunikationseinrichtung**

(57) Die ATM-Kommunikationseinrichtung (KE) dient zum Weiterleiten von im Zuge virtueller Verbindungen über zumindest eine Zubringerleitung (E1,...,En) zugeführten Nachrichtenzellen an eine für die jeweilige virtuelle Verbindung in Frage kommender Abnehmerleitungsanordnung (A1,...,An). Dabei werden für die jeweilige virtuelle Verbindung im Zuge des Verbindungsaufbaus charakteristische Parameter sowie eine von zumindest zwei unterschiedlichen Prioritäten festgelegt. Der jeweiligen Abnehmerleitungsanordnung ist eine Behandlungseinrichtung (BHE) zugeordnet, welche einen zentralen Zellen-Speicher (CM) aufweist, in dem verbindungsindividuelle Zellen-Warteschlangen für die Speicherung von Nachrichtenzellen eingerichtet sind. Mit dem Zellen-Speicher ist eine Steuereinrichtung (STE) verbunden, in welcher eine Zuordnungstabelle (LUT) geführt ist. Durch diese wird den in den Nachrichtenzellen geführten Verbindungsinformationen (VPI/VCI) eine Warteschlangen-Kennung sowie eine Prioritäts-Kennung zugeordnet. Nach Maßgabe der einzelnen Prioritäts-Kennungen werden die zugehörigen Warteschlangen-Kennungen in eine der jeweiligen Priorität zugeordnete Referenz-Warteschlange (Q1, Q2) eingefügt. Diese Referenz-Warteschlangen werden mit unterschiedlichen Prioritäten abgearbeitet, wobei die dadurch bereitgestellten Warteschlangen-Kennungen nacheinander dem Zellen-Speicher (CM) für eine Abgabe von gespeicherten Nachrichtenzellen zugeführt sind.

FIG 2

EP 0 730 361 A2

**Beschreibung**

Die Erfindung betrifft eine Schaltungsanordnung gemäß Oberbegriff des Patentanspruches 1. Eine derartige Schaltungsanordnung ist bereits durch die nicht vorveröffentlichte deutsche Patentanmeldung P 44 34 724.3 vorgeschlagen worden. Bei dieser Schaltungsanordnung ist vorgesehen, daß diese im Zuge von virtuellen Verbindungen mit unterschiedlichen Verkehrscharakteristiken zugeführte Nachrichtenströme in den unterschiedlichen Verkehrscharakteristiken zugeordnete Warteschlangen aufnimmt. Ausgangsseitig stehen diese Warteschlangen mit einer Ausgangs-Steuereinrichtung in Verbindung, unter deren Steuerung die Nachrichtenzellen nacheinander an eine mit dieser verbundene Abnehmerleitung weitergeleitet werden. Die Ausgangs-Steuereinrichtung ist dabei derart ausgelegt, daß durch diese den einzelnen Warteschlangen unterschiedliche Prioritäten zugeordnet sind und einer Warteschlange einer bestimmten Priorität lediglich dann eine Nachrichtenzelle für eine Weiterleitung entnommen wird, wenn in Warteschlangen höherer Priorität keine Nachrichtenzellen für eine Weiterleitung anstehen.

Es ist nun Aufgabe der vorliegenden Erfindung, einen Weg zu zeigen, wie eine Schaltungsanordnung der eingangs genannten Art ausgebildet werden kann, um eine prioritätsabhängige Weiterleitung von Nachrichtenzellen mit einem geringen schaltungstechnischen Aufwand realisieren zu können.

Gelöst wird diese Aufgabe bei einer Schaltungsanordnung der eingangs genannten Art durch die im Patentanspruch 1 angegebenen schaltungstechnischen Merkmale.

Der Vorteil der Schaltungsanordnung gemäß der vorliegenden Erfindung besteht dabei darin, daß die im Zuge von virtuellen Verbindungen auftretenden Nachrichtenzellen ohne Berücksichtigung der für die jeweilige virtuelle Verbindung geforderten Priorität in verbindungsindividuelle Warteschlangen eines zentralen Zellen-Speichers abgelegt werden und lediglich mit Hilfe einer Zuordnungstabelle Referenzen auf diese Warteschlangen in unterschiedlichen Prioritäten zugeordnete Referenz-Warteschlangen eingefügt werden. Auf diese Weise können den Referenz-Warteschlangen und damit den einzelnen virtuellen Verbindungen durch eine entsprechende Generierung der Zuordnungstabelle flexibel je nach der gewünschten Verkehrscharakteristik bestimmte Prioritäten zugeordnet werden.

Vorteilhafte Ausgestaltungen der Schaltungsanordnung gemäß der vorliegenden Erfindung ergeben sich aus den Patentansprüchen 2 bis 5. Der Vorteil der Ausgestaltungen gemäß den Patentansprüchen 2 bis 4 besteht dabei darin, daß durch diese Ausgestaltungen die Anzahl der Schnittstellen zwischen den Signalzweigen minimiert und somit ein hoher Grad an Parallelisierung der Steuerungsvorgänge in den einzelnen Signalzweigen ermöglicht ist. Die Ausgestaltung gemäß Patentanspruch 5 bringt dagegen den Vorteil mit sich, daß eingangs- und ausgangsseitige Behandlungseinrichtungen eine einheitliche Struktur aufweisen.

Im folgenden wird nun die vorliegende Erfindung anhand von Zeichnungen beispielsweise näher erläutert.

FIG 1      zeigt in schematischer Form eine Kommunikationseinrichtung, bei der die vorliegende Erfindung angewandt ist,

FIG 2      zeigt einen möglichen Aufbau einer der in FIG 1 lediglich schematisch dargestellten Behandlungseinrichtungen und

FIG 3 und 4      zeigen Flußdiagramme, auf welche im folgenden näher eingegangen wird.

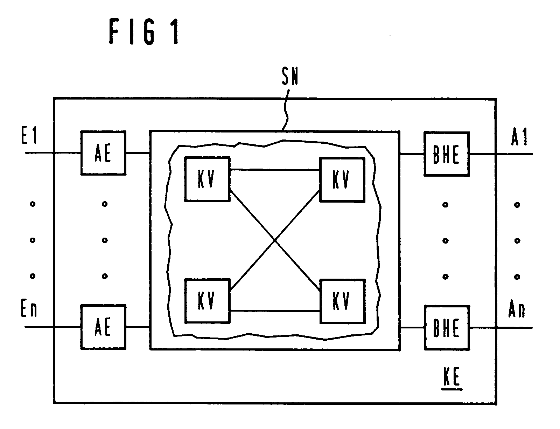

In FIG 1 ist eine nach einem asynchronen Transfermodus arbeitende ATM-Kommunikationseinrichtung KE schematisch dargestellt, an welche eine Mehrzahl von Zubringerleitungen E1,...,En sowie eine Mehrzahl von Abnehmerleitungsanordnung A1,...,An angeschlossen sind. Von diesen sind in FIG 1 lediglich die Zubringerleitungen E1,...,En und die Abnehmerleitungsanordnungen A1,...,An angegeben. Auf den Zubringerleitungen und Abnehmerleitunganordnungen erfolgt jeweils eine Übertragung von Nachrichtenzellen im Zuge von virtuellen Verbindungen nach einem asynchronen Übertragungsverfahren ("Asynchronous Transfer Mode"). Die Nachrichtenzellen weisen dabei in bekannter Weise eine feste Länge auf und verfügen jeweils neben einem Informationsteil für die Übertragung der eigentlichen Nutzinformationen über einen Zellenkopf, in welchem unter anderem Angaben bezüglich der jeweiligen virtuellen Verbindung bzw. des jeweiligen virtuellen Pfades enthalten sind. Die jeweilige Verbindung möge dabei durch eine sogenannte virtuelle Kanalnummer VCI, ein virtueller Pfad dagegen durch eine sogenannte virtuelle Pfadnummer VPI bezeichnet sein. Die Länge eines solchen Zellenkopfes umfaßt beispielsweise 5 Oktetts. Der genannte Informationsteil ist dagegen aus 48 Oktetts gebildet, um die eigentlichen Nutzinformationen zu übertragen. Unter Nutzinformationen sollen dabei allgemein Nachrichtensignale in digitaler Form verstanden werden, unter welche beispielsweise Nachrichten- und Textsignale sowie Sprach- bzw. Videosignale in digitaler Form fallen. In Übertragungspausen werden im übrigen den Nachrichtenzellen entsprechende Leerzellen übertragen.

Nach FIG 1 sind die Zubringerleitungen E1,...,En über jeweils eine Anschlußeinrichtung AE einer Koppelanordnung SN zugeführt. In diesen Anschlußeinrichtungen erfolgt unter anderem individuell für die einzelnen, über die jeweilige Zubringerleitung geführten virtuellen Verbindungen eine Überprüfung der Einhaltung der für die jeweilige virtuelle Verbindung festgelegten Parameter. Für die Koppelanordnung SN ist im übrigen in FIG 1 lediglich als Beispiel ein mehrstufiger Aufbau mit einer Mehrzahl von untereinander verbundenen Koppelvielfachen KV angegeben. Es können jedoch auch beliebige ein- oder mehrstufige Koppelanordnungen benutzt sein. Da der Aufbau und die Wirkungsweise derartiger Koppelanordnungen für die Weiterleitung von Nachrichtenzellen bekannt ist, wird im folgenden darauf nicht näher eingegangen. Außerdem wird auf eine nähere Erläuterung des Aufbaus und der Wirkungsweise der Anschlußeinrichtungen AE verzichtet, da deren Ausgestaltung nicht Gegenstand der vorliegenden Erfindung ist und Anordnungen zur Überwachung festgelegter Parameter für die einzelnen virtuellen Verbindungen allgemein bekannt sind.

Gemäß FIG 1 ist den Abnehmerleitungsanordnungen A1,...,An jeweils eine Behandlungseinrichtung BHE zugeordnet, um die im Zuge virtueller Verbindungen über die Koppelanordnung SN geführten Nachrichtenzellen an die jeweilige Ausgangsleitungsanordnung weiterzuleiten. Dabei wird im folgenden davon ausgegangen, daß der jeweiligen Behandlungseinrichtung Nachrichtenzellen zugeführt werden, die virtuellen Verbindungen mit unterschiedlicher Verkehrscharakteristik zugehörig sind. Dabei möge für erste Verbindungen, die im folgenden als RT-Verbindungen ("Real Time"-Verbindungen) bezeichnet werden, jeweils eine maximale Bitrate garantiert werden. Beispiele für derartige RT-Verbindungen sind Sprachverbindungen sowie Video-Konferenzverbindungen. Darüber hinaus mögen sogenannte NRT-Verbindungen ("Non Real Time"-Verbindungen) vorliegen, welche durch eine Spitzenbitrate ("Peak Bit Rate"), eine Obergrenze einer mittleren Bitrate ("Sustainable Bit Rate"), eine Burst-Toleranz sowie durch eine Zellen-Verzögerungstoleranz ("cell delay variation") charakterisiert sein können. Als Beispiele für derartige NRT-Verbindungen seien hier Verbindungen für File-Transfers, Buchungen oder für Mail-Dienste genannt. Die für eine virtuelle Verbindung sich ergebende Verkehrscharakteristik wird dabei im Zuge des Aufbaus der jeweiligen virtuellen Verbindung durch entsprechende Angaben von der diese Verbindung anfordernden Teilnehmereinrichtung angezeigt. Diesen Angaben entsprechende charakteristische Parameter werden in der für die jeweilige virtuelle Verbindung in Frage kommenden Behandlungseinrichtung BHE verbindungsindividuell festgehalten. Darüber hinaus wird davon ausgegangen, daß für die Weiterleitung der Nachrichtenzellen von RT-Verbindungen über die jeweilige Abnehmerleitungsanordnung A1,...,An eine maximale Bitrate reserviert ist und Nachrichtenzellen von NRT-Verbindungen nach einem statistischen Multiplexprinzip weitergeleitet werden. Dieses statistische Multiplexprinzip basiert bekanntlich darauf, daß für die Übertragung von Nachrichtenzellenströmen über eine Koppelanordnung sämtliche verfügbaren Ressourcen ohne Beachtung der ursprünglichen Verkehrscharakteristiken der einzelnen Nachrichtenzellenströme ausgenutzt und diese ursprünglichen Verkehrscharakteristiken nach Durchlauf der Koppelanordnung bei Notwendigkeit wieder rekonstruiert werden.

Für die Weiterleitung von Nachrichtenzellen sind dabei auf der jeweiligen Abnehmerleitungsanordnung periodisch wiederholt auftretende Zeitrahmen mit jeweils einer Mehrzahl von m Zeitschlitzen definiert. Die Zeitdauer eines Zeitschlitzes entspricht dabei der Übertragungszeitdauer einer Nachrichtenzelle auf der jeweiligen Ausgangsleitungsanordnung, d.h. pro Zeitschlitz wird eine Nachrichtenzelle weitergeleitet. Die Zeitdauer eines Zeitschlitzes wird im folgenden auch als Zellenzyklus bezeichnet.

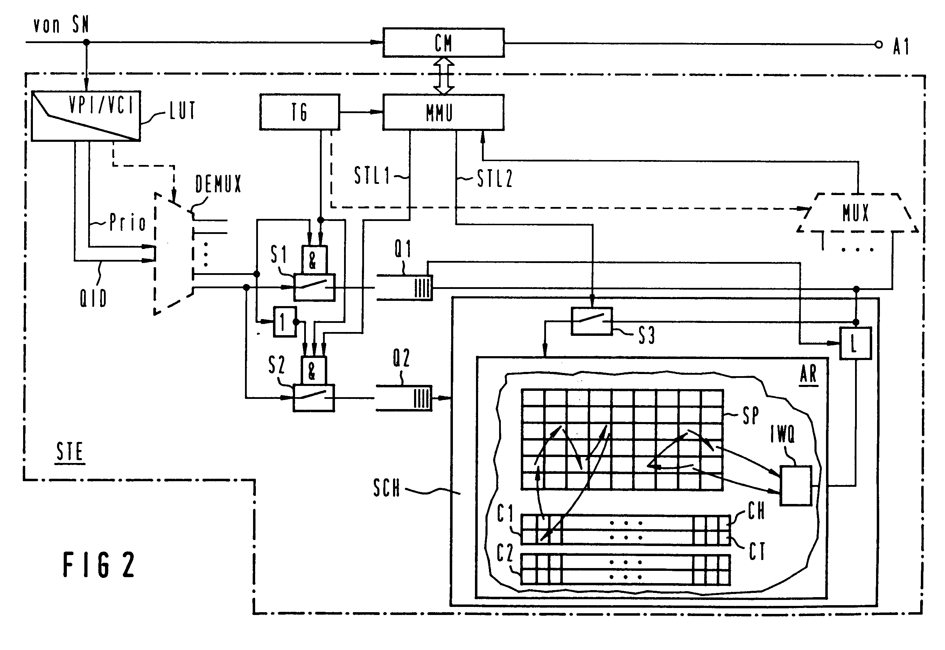

In FIG 2 ist ein möglicher Aufbau der zuvor erwähnten, in gleicher Weise aufgebauten Behandlungseinrichtungen am Beispiel der der Abnehmerleitungsanordnung A1 zugeordneten Behandlungseinrichtung BHE dargestellt. Dabei sind lediglich diejenigen Schaltungsteile angegeben, die für das Verständnis der vorliegenden Erfindung erforderlich sind.

Danach weist die Behandlungseinrichtung BHE in einem ersten Signalzweig einen zentralen Zellen-Speicher CM auf, der eingangsseitig über eine Übertragungsleitung von der in FIG 1 angegebenen Koppelanordnung SN Nachrichtenzellen unterschiedlicher virtueller Verbindungen zugeführt erhält und ausgangsseitig mit der Abnehmerleitungsanordnung A1 in Verbindung steht. In diesem Zellen-Speicher sind verbindungsindividuelle Zellen-Warteschlangen eingerichtet, in welche die über die Abnehmerleitungsanordnung A1 weiterzuleitenden Nachrichtenzellen der jeweiligen virtuellen Verbindung aufgenommen werden. Gesteuert wird der Zellen-Speicher von einer Steuereinrichtung STE her, die mit einer dieser zugehörigen Auswerteeinrichtung LUT an die Nachrichtenzellen führende Übertragungsleitung angeschlossen ist, über welche die Auswerteeinrichtung LUT die in Zellenköpfen eintreffender Nachrichtenzellen enthaltenen Verbindungsinformationen VPI/VCI zugeführt erhält. In dieser Auswerteeinrichtung ist eine Zuordnungstabelle geführt, welche der in dem jeweiligen Zellenkopf enthaltenen Verbindungsinformation VCI/VPI eindeutig eine Warteschlangen-Kennung QID, durch welche die für die Speicherung der gerade vorliegenden Nachrichtenzelle in Frage kommende Zellen-Warteschlange bezeichnet ist, sowie eine Prioritäts-Kennung zuordnet. Bei dem vorliegenden Ausführungsbeispiel ist durch letztere in Form einer 1-Bit-Information angegeben, ob die betreffende Nachrichtenzelle einer RT-Verbindung oder einer NRT-Verbindung zugehörig ist. Diese Auswerteeinrichtung LUT kann dabei als Speicher ausgebildet sein, dessen Speicherzellen durch aus den Verbindungsinformationen abgeleitete Adresseninformationen individuell wahlfrei ansteuerbar sind und in welchen jeweils eine der jeweiligen Verbindungsinformation zugeordnete Warteschlangen-Kennung und zugehörige Prioritäts-Kennung gespeichert sind, die auf eine Ansteuerung hin am Ausgang des Speichers bereitgestellt sind.

Die von der Auswerteeinrichtung LUT nacheinander bereitgestellten Prioritäts-Kennungen sind bei dem vorliegenden Ausführungsbeispiel einem Steuergatter eines elektronischen Schalters S1, die invertierten Prioritäts-Kennungen dagegen einem Steuergatter eines elektronischen Schalters S2 zugeführt. Der Schalter S1 stellt dabei den Eingang eines für RT-Verbindungen vorgesehenen Signalzweiges dar, während der Schalter S2 den Eingang eines für NRT-Verbindungen reservierten Signalzweiges bildet. Die Schaltstrecken dieser Schalter S1 und S2 sind gleichzeitig mit der der jeweiligen Prioritäts-Kennung zugehörigen Warteschlangen-Kennung beaufschlagt, wobei nach Maßgabe der gleichzeitig bereitgestellten Prioritäts-Kennung lediglich einer der Schalter leitend gesteuert ist. Durch einen Taktgeber TG wird dabei mit Hilfe des dem jeweiligen Schalter zugehörigen Steuergatters innerhalb eines oben genannten Zellenzyklus ein Zeitintervall festgelegt, in welchem die jeweilige Prioritäts-Kennung wirksam gesteuert ist. Dem Steuergatter des Schalters S2 ist dabei noch eine weitere Steuerleitung STL1 zugeführt, auf deren Funktion im folgenden noch näher eingegangen wird.

In dem durch den Schalter S1 eingeleiteten Signalzweig für RT-Verbindungen ist eine Referenz-Warteschlange Q1 beispielsweise unter Verwendung eines "First-In-First-Out"-Speichers vorgesehen, in welche die über den Schalter S1 geleiteten Warteschlangen-Kennungen aufgenommen werden. Die maximale Länge dieser Warteschlange ist dabei entsprechend der maximal zulässigen Verzögerungszeit für Nachrichtenzellen von RT-Verbindungen festgelegt. Die in diese Referenz-Warteschlange aufgenommenen Warteschlangen-Kennungen werden anschließend nacheinander einer der Steuereinrichtung STE zugehörigen Speichersteuereinrichtung MMU zugeführt, die an den Zellen-Speicher CM diesen Warteschlangen-Kennungen entsprechende Adressensignale abgibt, um jeweils eine in der in Frage kommenden Zellen-Warteschlange anstehende Nachrichtenzelle an die Abnehmerleitungsanordnung A1 weiterzuleiten. Die jeweilige Nachrichtenzelle wird dabei in einen oben bereits erwähnten Zeitschlitz eines Zeitrahmens eingefügt.

In dem durch den Schalter S2 eingeleiteten Signalzweig für NRT-Verbindungen ist eine Referenz-Warteschlange Q2 vorgesehen, welche lediglich dazu dient, den Arbeitstakt einer der Referenz-Warteschlange nachgeschalteten Bearbeitungseinrichtung SCH von dem Übertragungstakt für die auftretenden Nachrichtenzellen zu entkoppeln. Diese Bearbeitungseinrichtung ermittelt anhand der zugeführten Warteschlangen-Kennungen sowie der oben genannten, zur Verfügung stehenden charakteristischen Parameter für die jeweilige NRT-Verbindung die Zeitpunkte für die Abgabe der in dem Zellen-Speicher CM für die jeweilige NRT-Verbindung gespeicherten Nachrichtenzellen, um die für die jeweilige NRT-Verbindung festgelegte Verkehrscharakteristik für die Weiterleitung der Nachrichtenzellen zu rekonstruieren. Ein solches Rekonstruieren kann dabei darin bestehen, daß bei der Abgabe aufeinanderfolgender Nachrichtenzellen derselben NRT-Verbindung ein durch eine Spitzenbitrate festgelegter zeitlicher Abstand nicht unterschritten wird, was einer "Spacing"-Funktion entspricht, oder der zeitliche Abstand aufeinanderfolgender Nachrichtenzellen so festgelegt wird, daß sämtliche oben angegebene charakteristischen Parameter für die einzelnen NRT-Verbindungen erfüllt werden. Letzteres wird auch als "Shaping" bezeichnet. Ein Beispiel dafür wird im folgenden noch näher beschrieben.

Im übrigen kann anstelle der Bearbeitungseinrichtung SCH und der Referenz-Warteschlange Q2 im einfachsten Fall auch ein dem "First-In-First-Out"-Speicher Q1 entsprechender "First-In-First-Out"-Speicher vorgesehen sein, wenn ein Rekonstruieren der Nachrichtenzellenströme von NRT-Verbindungen nicht vorgesehen ist, sondern lediglich Nachrichtenzellen von NRT-Verbindungen mit einer niedrigeren Priorität gegenüber Nachrichtenzellenströmen von RT-Verbindungen weitergeleitet werden sollen.

Unabhängig von der Ausbildung des für NRT-Verbindungen vorgesehenen Signalzweiges ist bei dem vorliegenden Ausführungsbeispiel vorgesehen, daß in diesem Signalzweig vorliegende Warteschlangen-Kennungen nur dann an die Speichersteuereinrichtung MMU weitergeleitet werden, wenn die dem Signalzweig für RT-Verbindungen zugehörige Referenz-Warteschlange Q1 leer ist, d.h. RT-Verbindungen wird eine höhere Priorität zugeordnet. Bei dem vorliegenden Ausführungsbeispiel sind die Ausgänge der beiden Signalzweige für RT- und NRT-Verbindungen zusammengeführt, wobei der Ausgang des Signalzweiges für NRT-Verbindungen lediglich bei leerer Referenz-Warteschlange Q1 freigegeben, anderenfalls dagegen hochohmig gesteuert ist. Hierfür ist der Signalzweig für NRT-Verbindungen mit einem Register L abgeschlossen, welches ausgangsseitig durch ein von der Referenz-Warteschlange Q1 abgegebenes Steuersignal hochohmig steuerbar ist. Dieses Steuersignal wird immer dann abgegeben, wenn in dieser Referenz-Warteschlange zumindest noch eine Warteschlangen-Kennung enthalten ist.

In FIG 2 sind noch ein zwischen der Auswerteeinrichtung LUT und den Schaltern S1 und S2 liegender Demultiplexer DEMUX sowie ein zwischen dem gemeinsamen Ausgang der Signalzweige für RT-und NRT-Verbindungen und der Speichersteuereinrichtung MMU liegender Multiplexer MUX dargestellt. Diese sind fakultativ dann einsetzbar, wenn die Abnehmerleitungsanordnung A1 aus einem Bündel paralleler Einzelleitungen besteht und über diese individuell festgelegte virtuelle Verbindungen geführt werden sollen. In diesem Falle ist für jede dieser Einzelleitungen individuell ein Signalzweig für RT-Verbindungen und ein Signalzweig für NRT-Verbindungen in der zuvor beschriebenen Weise zugeordnet. Die den einzelnen Einzelleitungen zugehörigen Signalzweige sind dabei jeweils über ihre Schalter S1 und S2 an einen festgelegten Ausgang des Demultiplexers DEMUX und mit ihrem gemeinsamen Ausgang an einen festgelegten Eingang des Multiplexers MUX angeschlossen. In der oben genannten Zuordnungstabelle der Auswerteeinrichtung LUT ist zusätzlich jeder Verbindungsinformation VCI/VPI eine Angabe bezüglich der für die jeweilige Verbindung in Frage kommenden Einzelleitung zugeordnet, welche zusammen mit der zugehörigen Warteschlangen-Kennung und Prioritäts-Kennung am Ausgang der Auswerteeinrichtung LUT bereitgestellt und dem Demultiplexer DEMUX als Steuersignal zugeführt ist. Die gemeinsamen Ausgänge der den Einzelleitungen individuell zugehörigen Signalzweige werden über den Multiplexer MUX nacheinander innerhalb eines Zellenzyklus mit der Speichersteuereinrichtung MMU verbunden. Hierfür erhält der Multiplexer von dem zuvor genannten Taktgenerator TG entsprechende Steuersignale zugeführt.

Bezüglich der zuvor anhand der Fig.2 beschriebenen Behandlungseinrichtung BHE sei noch darauf hingewiesen, daß lediglich als Beispiel die Behandlung zweier unterschiedlicher Verbindungsarten, nämlich die Behandlung von RT- und NRT-Verbindungen, beschrieben worden ist. Bei einer Modifizierung der zuvor beschriebenen Zuordnungstabelle und Hinzufügen weiterer prioritätsindividueller Signalzweige ist mit einer solchen Behandlungseinrichtung auch eine beliebige Anzahl unterschiedlicher Verbindungsarten prioritätsabhängig behandelbar.

Darüber hinaus sei noch darauf hingewiesen, daß den zuvor beschriebenen Behandlungseinrichtungen BHE entsprechende Behandlungseinrichtungen zwischen den oben genannten Anschlußeinrichtungen AE und der Koppelanordnung SN geschaltet sein können, um die über diese Koppelanordnung zu übertragenden Nachrichtenzellen zuächst zwischenzuspeichern. In diesem Falle können die Behandlungseinrichtungen jeweils eine Bearbeitungseinrichtung SCH enthalten, welche beispielsweise derart ausgebildet ist, daß Nachrichtenzelle von NRT-Verbindungen nach einem oben bereits erwähnten "First-In-First-Out"-Prinzip oder nach einem sogenannten "Round Robin"-Prinzip weitergeleitet werden.

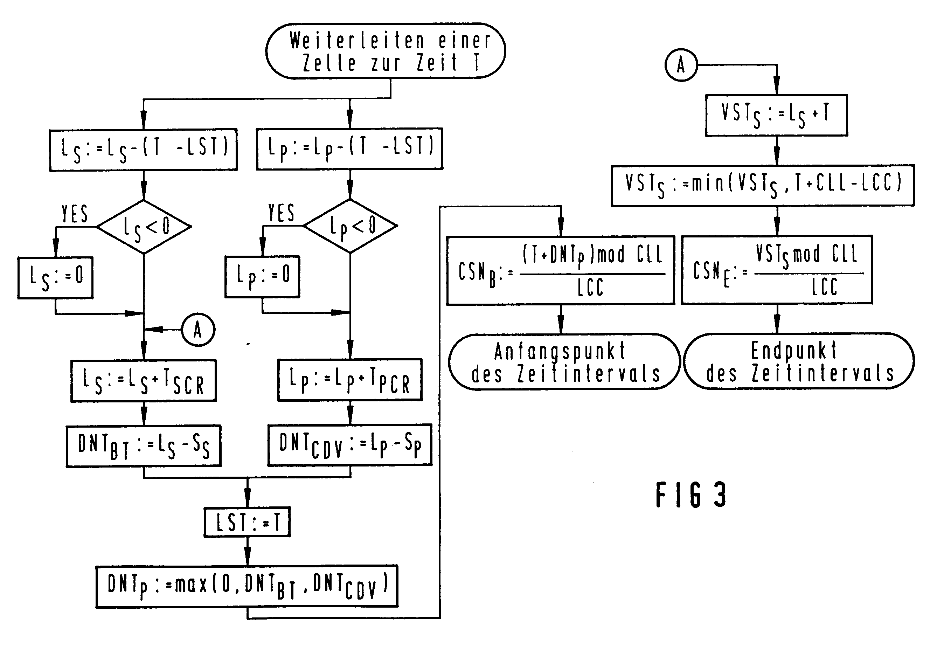

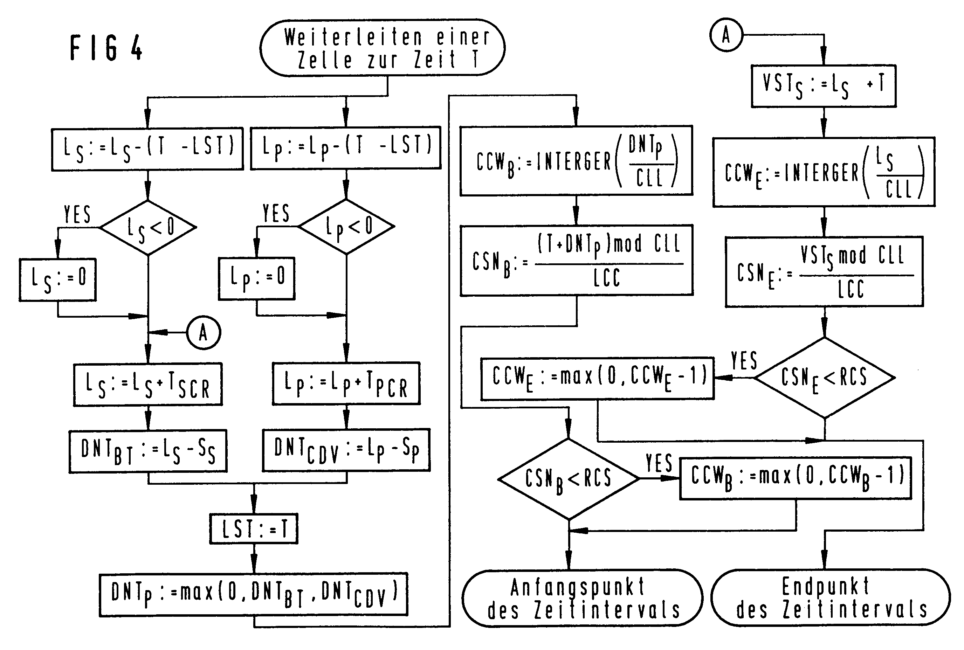

Im folgenden wird nun anhand der in den Figuren 3 und 4 dargestellten Flußdiagramme ein Beispiel für die oben bereits erwähnte Ermittlung der Abgabezeitpunkte von NRT-Verbindungen zugehörigen Nachrichtenzellen durch die Bearbeitungseinrichtung SCH beschrieben. Dabei wird als Beispiel davon ausgegangen, daß für die jeweilige NRT-Verbindung die charakteristischen Parameter Spitzenbitrate PCR ("peak bit rate"), Obergrenze der mittleren Bitrate SCR ("sustainable bit rate"), Bursttoleranz BT und Zellen-Verzögerungstoleranz CDV ("cell delay variation") rekonstruiert werden sollen.

Die Bearbeitungseinrichtung SCH weist, wie in Fig. 2 dargestellt, eine Speichereinrichtung SP auf, in welcher für jede der über die zugehörige Abnehmerleitungsanordnung A1 verlaufenden NRT-Verbindung und damit für jede der Zellen-Warteschlangen des Zellen-Speichers CM ein Speicherbereich vorgesehen ist. In diesen Speicherbereichen, die wahlfrei nach Maßgabe der der Bearbeitungseinrichtung SCH zugeführten Warteschlangen-Kennungen ansteuerbar sind, sind jeweils Warteschlangen-Kennungen für mögliche, noch zu erläuternde Vorgänger und/oder Nachfolger sowie zwei Leaky-Bucket-Parametersätze gespeichert, nämlich ein erster, der Obergrenze der mittleren Bitrate SCR und der Bursttoleranz BT zugeordneter Leaky-Bucket-Parametersatz LB1 und ein zweiter, der Spitzenbitrate PCR und der Zellen-Verzögerungstoleranz CDV zugeordneter Leaky-Bucket-Parametersatz LB2. LB1 enthält dabei einen momentanen Leaky-Bucket-Füllstandswert $L_s$, einen von der Bursttoleranz BT abhängigen Maximalwert des Leaky-Buckets $S_s$ sowie einen Zeitwert $T_{SCR}$, durch welchen der Zeitabstand zweier aufeinander folgender Nachrichtenzellen unter Berücksichtigung der Obergrenze der mittleren Bitrate SCR festgelegt ist. In entsprechender Weise enthält der Leaky-Bucket-Parametersatz LB2 einen momentanen Leaky-Bucket-Füllstandswert $L_p$, einen von der Zellen-Verzögerungstoleranz CDV abhängigen Maximalwert des Leaky-Buckets $S_p$ sowie einen Zeitwert $T_{PCR}$, durch welchen der Zeitabstand zweier aufeinander folgender Nachrichtenzellen unter Berücksichtigung der Spitzenbitrate PCR festgelegt ist. Außerdem ist für LB1 und LB2 gemeinsam ein Zeitwert LST festgehalten, der den letzten Bearbeitungszeitpunkt für eine Nachrichtenzelle der jeweiligen NRT-Verbindung angibt. Darüber hinaus sind in der Speichereinrichtung SP global zwei Systemparameter CLL und LCC gespeichert, wobei CLL der oben genannten Anzahl m von Zeitschlitzen innerhalb eines Zeitrahmens auf der Abnehmerleitungsanordnung A1, LCC dagegen der Zeitdauer eines solchen Zeitschlitzes entspricht. Die Werte $S_s$, $S_p$, $T_{SCR}$ und $T_{PCR}$ werden im übrigen der Bearbeitungseinrichtung SCH im Zuge des Aufbaus der jeweiligen NRT-Verbindung von einer der Koppelanordnung SN zugehörigen, in Fig.1 nicht dargestellten Steuereinrichtung her zugeführt. Da dieses Zuführen nicht Gegenstand der vorliegenden Erfindung ist, wird darauf nicht näher eingegangen.

Wie im folgenden noch anhand der Figuren 3 und 4 erläutert wird, wird bei dem vorliegenden Ausführungsbeispiel nach Maßgabe der gerade beschriebenen Leaky-Bucket-Parametersätze mit jedem Weiterleiten einer in dem Zellen-Speicher CM gespeicherten Nachrichtenzelle an die Abnehmerleitungsanordnung A1 durch eine der Bearbeitungseinrichtung SCH zugehörige Arithmetikeinrichtung AR für eine dieser Nachrichtenzelle unmittelbar nachfolgende Nachrichtenzelle derselben NRT-Verbindung und damit derselben Zellen-Warteschlange ein Zeitintervall bestimmt, in welchem die betreffende Nachrichtenzelle weiterzuleiten ist. Intervallanfang und Intervallende eines solchen Zeitintervalls sind jeweils durch einen der Zeitschlitze eines oben erwähnten Zeitrahmens repräsentiert. Den Intervallanfängen der für die einzelnen weiterzuleitenden Nachrichtenzellen ermittelten Zeitintervalle ist dabei eine erste Zeittabelle C1 ("calendar"), den Intervallenden dagegen eine zweite Zeittabelle C2 zugeordnet. Diese Zeittabellen verfügen jeweils über eine Anzahl von Speicherelementen, die der Anzahl m von Zeitschlitzen eines oben genannten Zeitrahmens entspricht. Für die einzelnen Speicherelemente der Zeittabellen wird dabei, wie in Fig.2 angedeutet, jeweils eine Ausleseliste ("chain") geführt, in welcher die für den jeweiligen Zeitschlitz und damit für das jeweilige Speicherelement bestimmten Warteschlangen-Kennungen mit Hilfe der für diese in der Speichereinrichtung SP gespeicherten Zeiger miteinander verkettet sind. Eine solche Ausleseliste ist durch einen Anfangs-Zeiger CH ( Warteschlangen-Kennung) und durch einen End-Zeiger CT gekennzeichnet, die in dem zugeordneten Speicherelement gespeichert sind.

In der Arithmetikeinrichtung AR ist eine der Anzahl m der in den Zeittabellen jeweils vorhandenen Speicherelemente entsprechende Modulo-m-Zähleinrichtung vorhanden, deren momentaner Zählerstand die aktuelle Teit T anzeigt und mit jedem Beginn eines Zellenzyklus um den Wert "1" inkrementiert wird. Nach Maßgabe dieses momentanen Zählerstandes werden die Zeittabellen angesteuert, um die der aktuellen Zeit T zugeordneten Anfangs- und End-Zeiger CH und CT auszulesen. Für den Fall, daß durch diese Zeiger das Vorhandensein zumindest einer Warteschlangen-Kennung in der Ausleseliste und damit zumindest einer in einer Zellen-Warteschlange des Zellenspeichers CM gespeicherten Nachrichtenzelle angezeigt ist, wird die in Frage kommende Ausleseliste in eine nach dem "First-In-First-Out"-Prinzip arbeitende Ausgangs-Warteschlange IWQ eingefügt. Aus dieser wird pro Zeitschlitz eine Warteschlangen-Kennung an die in Fig.2 dargestellte Speichersteuereinrichtung MMU weitergeleitet, um aus der durch diese bezeichneten Zellen-Warteschlange des Zellen-Speichers CM eine Nachrichtenzelle in der oben angegebenen Weise an die Abnehmerleitungsanordnung A1 weiterzuleiten, und zwar dann, wenn die den RT-Verbindungen zugeordnete Referenz-Warteschlange Q1 (Fig.2) leer ist. Dabei haben die Ausleselisten der Zeittabelle C2 Priorität gegenüber den Ausleselisten der Zeittabelle C1, d.h. eine Ausleseliste der Zeittabelle C1 wird nur bei leerer Ausgangs-Warteschlange in diese eingefügt. Im übrigen wird eine Ausleseliste nach deren Einfügen in die Ausgangs-Warteschlange in der zugehörigen Zeittabelle zunächst als leer gekennzeichnet, bis neue Einträge für einen nachfolgenden Zeitrahmen erfolgen. Darüber hinaus werden die in der betreffenden Ausleseliste geführten Warteschlangen-Kennungen aus der in Frage kommenden Ausleseliste bzw. Ausleselisten der verbleibenden Zeittabelle entfernt, d.h. ausgekettet.

Bei dem vorliegenden Ausführungsbeispiel ist vorgesehen, daß in der Speichereinrichtung SP und damit in den Zeittabellen C1 und C2 pro Zellen-Warteschlange des Zellen-Speichers CM höchstens eine Referenz enthalten ist. Dies wird nach Fig.2 dadurch erreicht, daß lediglich bei Aufnahme einer Nachrichtenzelle in eine leere Zellen-Warteschlange des Zellen-Speichers CM von der Speichersteuereinrichtung MMU über die Steuerleitung STL1 ein Steuersignal abgegeben wird, durch welches die zugehörige Warteschlangen-Kennung über den Schalter S2 und die Referenz-Warteschlange Q2 an die Bearbeitungseinrichtung SCH für eine Bearbeitung, d.h. für eine Ermittlung des Abgabezeitpunktes, weitergeleitet wird. Dies erfolgt beispielsweise unmittelbar nach dem Aufbau einer NRT-Verbindung bzw. immer dann, wenn für die jeweilige NRT-Verbindung längere Zeit keine Nachrichtenzelle eingetroffen ist.

Bei Aufnahme einer Nachrichtenzelle in eine bereits zumindest mit einer Nachrichtenzelle gefüllte Zellen-Warteschlange ist dagegen der Schalter S2 durch ein entsprechendes Steuersignal auf der Steuerleitung STL1 gesperrt, so daß die zugehörige Warteschlangen-Kennung vernichtet wird. In diesem Falle wird jedoch mit der Abgabe einer Warteschlangen-Kennung an die Speichersteuereinrichtung MMU und damit mit der Weiterleitung einer dieser Warteschlangen-Kennung zugeordneten Nachrichtenzelle an die Abnehmerleitungsanordnung A1 eine Kopie der betreffenden Warteschlangen-Kennung der Arithmetikeinrichtung AR zurückgeführt, durch welche dann auf der Basis der gerade vorliegenden aktuellen Zeit T der Warteschlangen-Kennung eine neue Abgabezeit in der oben angegebenen Weise zugeordnet wird. Dafür ist von dem Ausgang des in Fig.2 dargestellten Registers L eine Rückführleitung zu der Arithmetikeinrichtung AR geführt, welche über einen Schalter S3 lediglich bei Abgabe einer Nachrichtenzelle an die Abnehmerleitungsanordnung A1 und einer verbleibenden gefüllten Zellen-Warteschlange aktiviert ist. Gesteuert wird dieser Schalter über eine Steuerleitung STL2 von der Speichersteuereinrichtung MMU her.

Nach der generellen Beschreibung der Ermittlung des Abgabezeitpunktes für in den Zellen-Speicher CM aufgenommene Nachrichtenzellen wird nunmehr zunächst anhand des Flußdiagrammes in Fig.3 näher auf diese Ermittlung nach Maßgabe der oben erwähnten Leaky-Bucket-Parameter durch die Arithmetikeinrichtung AR eingegangen.

Die Leaky-Bucket-Füllstandswerte $L_s$ und $L_p$ repräsentieren die Zeiten, nach deren Ablauf die zugeordnete Zellen-Warteschlange des Zellen-Speichers CM über die Abnehmerleitungsanordnung A1 entleert sein würde, wenn diese Zellen-Warteschlange hypothetisch mit genau der Obergrenze der mittleren Bitrate bzw. der Spitzenbitrate bedient worden wäre. Im linken Zweig des Flußdiagrammes, welcher die Abläufe des der Obergrenze der mittleren Bitrate SCR und der Bursttoleranz BT zugeordneten Leaky-Buckets wiedergibt, wird zunächst zum aktuellen Zeitpunkt T der Abgabe einer Nachrichtenzelle an die Abnehmerleitungsanordnung A1 der Leaky-Bucket-Füllstandswert $L_s$ um einen Wert (T-LST) dekrementiert, der der Abflußmenge von Nachrichtenzellen aus der zugeordneten Zellen-Warteschlange im Zeitintervall zwischen dem letzten Bearbeitungszeitpunkt LST einer Nachrichtenzelle und der aktuellen Zeit T entspricht, wenn Nachrichtenzellen mit der Obergrenze der mittleren Bitrate (SCR) übertragen worden wären. Dabei wird überprüft, ob der daraus resultierende Wert für $L_s$ negativ ist. Ist dies der Fall, so

wird $L_s$ auf den Wert = "0" gesetzt, d.h. es wird nur ein Wert "0" oder ein positiver Wert zugelassen. Der daraus resultierende Wert für $L_s$ wird dann um den Zeitwert $T_{SCR}$ inkrementiert, durch welchen, wie oben bereits erwähnt, der Zeitabstand zwischen zwei aufeinander folgenden Nachrichtenzellen der- selben NRT-Verbindung unter Berücksichtigung der Obergrenze der mittleren Bitrate SCR festgelegt ist. Anschließend wird der aktuelle Wert $L_s$ für eine nachfolgende Ermittlung festgehalten und zusätzlich durch Subtraktion des Maximalwertes des Leaky-Buckets $S_s$ von diesem Wert $L_s$ eine Verzögerungszeit $DNT_{BT}$ gewonnen. Auch hierbei wird diese Verzögerungszeit auf den Wert "0" gesetzt, falls sich für die Verzögerungszeit ein negativer Wert ergibt.

Im mittleren Zweig des Flußdiagrammes, welcher die Abläufe des der Spitzenbitrate PCR und der Zellen-Verzögerungstoleranz CDV zugeordneten Leaky-Buckets wiedergibt, wird in entsprechender Weise eine Verzögerungszeit $DNT_{CDV}$ ermittelt, lediglich mit dem Unterschied, daß hier der Leaky-Bucket-Füllstandswert $L_p$, der Maximalwert $S_p$ sowie ein Zeitwert $T_{PCR}$ herangezogen werden. Durch letzteren ist dabei, wie oben bereits erwähnt, der Zeitabstand zwischen zwei aufeinander folgenden Nachrichtenzellen derselben NRT-Verbindung unter Berücksichtigung der Spitzenbitrate PCR festgelegt.

Im Anschluß an die Ermittlung der Verzögerungszeiten $DNT_{BT}$ und $DNT_{CDV}$ in dem linken und mittleren Zweig des Flußdiagrammes wird zunächst der Wert LST auf den Wert der aktuellen Zeit T gesetzt und für eine nachfolgende Ermittlung festgehalten. Anschließend wird von den beiden Verzögerungszeiten $DNT_{BT}$ und $DNT_{CDV}$ die größere ausgewählt und daraus unter Berücksichtigung der aktuellen Zeit T und der oben genannten Länge CLL eines Zeitrahmens und damit der Zeittabelle sowie der Länge eines Zeitschlitzes LCC derjenige Zeitschlitz $CSN_B$ ermittelt, zu dem frühestens die gerade vorliegende Nachrichtenzelle weiterzuleiten ist.

Darüber hinaus wird anhand der aktuellen Zeit T und des zuvor im linken Zweig des Flußdiagrammes an dem Punkt A ermittelten aktuellen Wertes für $L_s$ ein Zeitpunkt $VST_s := (L_s + T)$ ermittelt, zu dem spätestens die gerade vorliegende Nachrichtenzelle an die Abnehmerleitungsanordnung A1 weiterzuleiten ist, um den maximalen Abstand zweier aufeinander folgender Nachrichtenzellen derselben NRT-Verbindung kleiner oder gleich $T_{SCR}$ sicherzustellen. Von diesem Zeitpunkt und dem maximal in den Zeittabellen C1 und C2 darstellbaren Zeitpunkt $(T + CLL - LCC)$ wird der kleinere Wert ausgewählt und daraus unter Berücksichtigung der aktuellen Zeit T und der oben genannten Länge CLL eines Zeitrahmens und damit der Zeittabelle sowie der Länge eines Zeitschlitzes LCC derjenige Zeitschlitz $CSN_E$ ermittelt, zu dem spätestens die gerade vorliegende Nachrichtenzelle weiterzuleiten ist.

Damit ist die Ermittlung eines Zeitintervalls für die Weiterleitung einer Nachrichtenzelle abgeschlossen und es sind lediglich noch in der oben angegebenen Weise Einträge in die Ausleselisten der Zeittabellen C1 und C2 vorzunehmen.

Das in Fig.4 dargestellte Flußdiagramm entspricht im wesentlichen dem in Fig.3 wiedergebenen Flußdiagramm. Bei diesem wird davon ausgegangen, daß die oben genannten Zeittabellen und damit die Modulo-m-Zähleinrichtung eine kurze Periode aufweisen und in einem festgelegten Zeitschlitz (RCS) dieser Periode die Leaky-Bucket-Parameter einer der Zellen-Warteschlangen im Zuge eines "Refreshs" aktualisiert werden.

Mit der Ermittlung des Zeitschlitzes $CSN_B$ (Fig.3) wird zusätzlich durch Division der Verzögerungszeit $DNT_p$ durch die Länge CLL der Zeitabellen die Anzahl $CCW_B$ der Perioden ermittelt, die für die Realisierung der Verzögerungszeit erforderlich sind. Bei einem Wert $CCW_B$="0" wird der Zeitschlitz $CSN_B$ sofort berücksichtigt. Anderenfalls wird der Wert $CCW_B$ zusammen mit dem ermittelten Zeitschlitz $CSN_B$ und den übrigen Leaky-Bucket-Parametern für die jeweilige NRT-Verbindung in der Speichereinrichtung SP gespeichert.

In entsprechender Weise wird mit der Ermittlung des Zeitschlitzes $CSN_E$ (Fig.3) zusätzlich durch Division des Wertes $L_s$ durch die Länge CLL der Zeitabellen C1 und C2 die Anzahl der Perioden ermittelt, die für die Realisierung der Verzögerungszeit $CSN_E$ erforderlich sind. Bei einem Wert $CCW_E$="0" wird der Zeitschlitz $CSN_E$ sofort berücksichtigt. Andernfalls wird der Wert $CCW_E$ ebenfalls zusammen mit dem ermittelten Zeitschlitz $CSN_E$ und den übrigen Leaky-Bucket-Parametern für die jeweilige NRT-Verbindung in der Speichereinrichtung SP gespeichert.

Die gespeicherten Werte für $CCW_B$ und $CCW_E$ werden jeweils mit jedem "Refresh" um den Wert "1" dekrementiert. Erst bei einem Wert "0" werden dann die zuvor ermittelten Zeitschlitze $CSN_B$ und $CSN_E$ in den Zeittabellen C1 und C2 berücksichtigt. Diese Vorgehensweise bringt den Vorteil mit sich, daß die Länge der Zeittabellen minimiert werden kann.

Abschließend sei noch bezüglich der anhand der Flußdiagramme in den Fig. 3 und 4 erläuterten Steuerungsabläufe darauf hingewiesen, daß mit diesen eine Weiterleitung von Nachrichtenzellen einer NRT-Verbindung unter Berücksichtigung der festgelegten Spitzenbitrate (PCR), der Obergrenze der mittleren Bitrate (SCR), der Bursttoleranz (BT) und der Zellen-Verzögerunstoleranz (CDV) sichergestellt ist. Falls jedoch für eine solche Weiterleitung lediglich ein Teil dieser Parameter sicherzustellen ist, brauchen lediglich die dafür relevanten Steuerungsabläufe in den Flußdiagrammen herangezogen werden.

**Patentansprüche**

1. Schaltungsanordnung zum Weiterleiten von einer nach einem asynchronen Transfermodus arbeitenden ATM-Kommunikationseinrichtung (KE) im Zuge virtueller Verbindungen über zumindest eine Zubringerleitung (E1,...,En) zugeführten Nachrichtenzellen, die jeweils eine die jeweilige virtuelle Verbindung bezeichnende Verbindungsinformation (VPI/VCI) fuhren, an eine für die jeweilige virtuelle Verbindung in Frage kommende Abnehmerleitungsanordnung (A1,...,An),
wobei für die jeweilige virtuelle Verbindung im Zuge des Verbindungsaufbaus charakteristische Parameter festgelegt werden, durch welche der zu übertragende Nachrichtenzellenstrom definiert und durch zumindest einen Teil dieser charakteristischen Parameter eine von zumindest zwei unterschiedlichen Prioritäten festgelegt ist,
und wobei zumindest der jeweiligen Abnehmerleitungsanordnung eine mit den für diese bestimmten Nachrichtenzellenströmen beaufschlagte Behandlungseinrichtung (BHE) zugeordnet ist, durch welche die Weiterleitung von Nachrichtenzellen nach Maßgabe der den einzelnen virtuellen Verbindungen zugeordneten Prioritäten gesteuert ist,
**dadurch gekennzeichnet,**
daß die jeweilige Behandlungseinrichtung (BHE) einen zentralen Zellen-Speicher (CM) aufweist, in welchem verbindungsindividuelle Zellen-Warteschlangen für die Speicherung von den virtuellen Verbindungen jeweils zugehörigen Nachrichtenzellen eingerichtet sind,
daß mit dem Zellen-Speicher eine Steuereinrichtung (STE) verbunden ist, in welcher eine Zuordnungstabelle (LUT) geführt ist, durch welche den Verbindungsinformationen der zu speichernden Nachrichtenzellen jeweils eine die für die jeweilige Nachrichtenzelle in Frage kommende Zellen-Warteschlange bezeichnende Warteschlangen-Kennung sowie eine Prioritäts-Kennung zugeordnet sind,
daß nach Maßgabe einer durch die Zuordnungstabelle bereitgestellten Prioritäts-Kennung die zugehörige Warteschlangen-Kennung in eine der jeweiligen Priorität zugeordnete Referenz-Warteschlange (Q1, Q2) eingefügt ist,
daß die Abarbeitung der einzelnen Referenz-Warteschlangen mit unterschiedlichen Prioritäten erfolgt, indem einer Referenz-Warteschlange einer bestimmten Priorität lediglich dann eine für eine Abarbeitung anstehende Warteschlangen-Kennung entnommen wird, wenn die Referenz-Warteschlange bzw. Referenz-Warteschlangen höherer Priorität leer ist bzw. sind,
und daß auf die Entnahme einer Warteschlangen-Kennung hin dem zentralen Zellen-Speichers (CM) eine dieser entsprechende Adresseninformation für die Weiterleitung einer in der jeweiligen Zellen-Warteschlange gespeicherten Nachrichtenzelle zugeführt ist.

2. Schaltungsanordnung nach Anspruch 1,
**dadurch gekennzeichnet,**
daß die jeweilige Behandlungseinrichtung (BHE) derart ausgebildet ist,

daß diese über einen ersten, den Zellen-Speicher (CM) enthaltenden Signalzweig verfügt,
daß an einer eingangsseitigen Abzweigstelle des ersten Signalzweiges eine die Zuordnungstabelle enthaltende Speichereinrichtung (LUT) vorgesehen ist, deren Speicherzellen durch den Verbindungsinformationen (VPI/VCI) der Nachrichtenzellen entsprechende Adressensignale wahlfrei ansteuerbar sind und auf eine Ansteuerung hin eine in diesen jeweils gespeicherte Warteschlangen-Kennung sowie eine Prioritäts-Kennung bereitstellen,
daß die bereitgestellten Warteschlangen-Kennungen jeweils parallel weiteren, den unterschiedlichen Prioritäten zugeordneten Signalzweigen zugeführt sind, wobei über Schaltmittel (S1, S2) nach Maßgabe der der jeweiligen Warteschlangen-Kennung zugehörigen Prioritäts-Kennung lediglich ein dieser zugeordneter Signalzweig freigegeben ist,
daß in den weiteren Signalzweigen jeweils zumindest eine Referenz-Warteschlange (Q1, Q2) für die Aufnahme von Warteschlangen-Kennungen vorgesehen ist,
daß die weiteren Signalzweige ausgangsseitig zusammengeführt sind
und daß ein einer bestimmten Priorität zugeordneter Signalzweig über weitere Schaltmittel (L) für die Abgabe von in der zugehörigen Referenz-Warteschlange gespeicherten Warteschlangen-Kennungen durch einen Signalzweig höherer Priorität freigegeben ist.

3. Schaltungsanordnung nach Anspruch 2,
**dadurch gekennzeichnet,**
daß die Freigabe eines Signalzweiges durch einen Signalzweig höherer Priorität dann erfolgt, wenn dessen zugehörige Referenz-Warteschlange leer ist.

4. Schaltungsanordnung nach einem der Ansprüche 1 bis 3,
**dadurch gekennzeichnet,**
daß der Behandlungseinrichtung (BHE) Nachrichtenzellen von Echtzeit-Verbindungen und Nicht-Echtzeit-Verbindungen zugeführt sind,
daß lediglich zwei weitere, einer hohen und einer niedrigen Priorität zugeordnete Signalzweige vorgesehen sind,
daß den Echtzeit-Verbindungen der Signalzweig mit hoher Priorität zugeordnet und die maximale Länge der zugehörigen Referenz-Warteschlange (Q1) entsprechend der zulässigen maximalen Nachrichtenzellen-Verzögerungszeit festgelegt ist,
daß den Nicht-Echtzeit-Verbindungen der Signalzweig mit niedriger Priorität zugeordnet ist und der zugehörigen Referenz-Warteschlange eine Bearbeitungseinrichtung (SCH) nachgeschaltet ist, welche derart ausgebildet ist, daß durch diese die Weiterleitung der zugeführten Warteschlangen-Kennungen nach Maßgabe der für die jeweilige Nicht-Echtzeit-Verbindung festgelegten charakteristischen Parameter erfolgt.

5. Schaltungsanordnung nach einem der Ansprüche 1 bis 4,
   **dadurch gekennzeichnet,**
   daß sowohl den Zubringerleitungen (E1,...,En) als auch den Abnehmerleitungsanordnungen jeweils eine Behandlungseinrichtung (BHE) zugeordnet ist.

# FIG 1

FIG 2

Weiterleiten einer
Zelle zur Zeit T

$L_S := L_S - (T - LST)$

$L_p := L_p - (T - LST)$

YES $\quad L_S < 0$

YES $\quad L_p < 0$

$L_S := 0$

$L_p := 0$

(A)

$L_S := L_S + T_{SCR}$

$L_p := L_p + T_{PCR}$

$DNT_{BT} := L_S - S_S$

$DNT_{CDV} := L_p - S_p$

$LST := T$

$DNT_p := \max(0, DNT_{BT}, DNT_{CDV})$

(A)

$VST_S := L_S + T$

$VST_S := \min(VST_S, T + CLL - LCC)$

$CSN_B := \dfrac{(T + DNT_p)\bmod CLL}{LCC}$

$CSN_E := \dfrac{VST_S \bmod CLL}{LCC}$

Anfangspunkt
des Zeitintervals

Endpunkt
des Zeitintervals

FIG 3

FIG 4

$VST_S := L_S + T$

$CCW_E' := INTERGER\left(\dfrac{L_S}{CLL}\right)$

$CSN_E' := \dfrac{VST_S \bmod CLL}{LCC}$

$CSN_E < RCS$

YES

$CCW_E' := \max(0, CCW_E - 1)$

$CCW_B' := \max(0, CCW_B - 1)$

Endpunkt des Zeitintervals

A

$CCW_B := INTERGER\left(\dfrac{DNT_P}{CLL}\right)$

$CSN_B' := \dfrac{(T + DNT_P)\bmod CLL}{LCC}$

$CSN_B < RCS$

YES

Anfangspunkt des Zeitintervals

Weiterleiten einer Zelle zur Zeit T

$L_P' := L_P - (T - LST)$

$L_P < 0$

YES

$L_P := 0$

$L_P := L_P + T_{PCR}$

$DNT_{CDV} := L_P - S_P$

$LST := T$

$DNT_P := \max(0, DNT_{BT}, DNT_{CDV})$

$L_S' := L_S - (T - LST)$

$L_S < 0$

YES

$L_S := 0$

A

$L_S := L_S + T_{SCR}$

$DNT_{BT} := L_S - S_S$